# EUROPÄISCHE PATENTANMELDUNG

(11) **EP 0 994 014 A1**
(43) Veröffentlichungstag der Anmeldung: **19.04.2000**
(21) Anmeldenummer: 98811032.6
(22) Anmeldetag: 16.10.1998
(51) Int. Cl.: B62K 25/08, B62K 25/04, B62K 21/04, F16F 9/44

(54) **Einrichtung zur Hydraulischen Dämpfung des Vorder- und/oder Hinterrads eines Zweiradfahrzeugs**

(71) Anmelder: Oskar Diener AG, Feinmechanik, 8424 Embrach (CH)
(72) Erfinder: Schweri, René, 8424 Embrach (CH)
(74) Vertreter: Rottmann, Maximilian R.

(57) **Zusammenfassung**

Eine Einrichtung zur hydraulischen Dämpfung des Vorder- und/oder Hinterrads eines Zweiradfahrzeugs weist ein fremdbetätigtes Steuerventil (40) auf, mittels welchem die pro Zeiteinheit verdrängte und für die Dämpfung beim Einfedern massgebende Ölmenge variierbar ist. Das Steuerventil (40) umfasst eine hohlzylindrisch ausgebildete Hülse, in welche zumindest eine radial verlaufende Durchflussöffnung eingelassen ist. Ein Steuerschieber ist beweglich in der Hülse aufgenommen und über einen zum Lenker führenden Kabelzug (37) derart verschiebbar, dass der Durchlassquerschnitt der Durchflussöffnung variierbar ist. Zum Einstellen der Dämpfung beim Ausfedern ist eine Stellschraube vorgesehen, mittels welcher der Durchlassquerschnitt einer Bohrung im Hubrohr (18) verstellt werden kann. Durch Schliessen des Steuerventils (40) kann die Gabel blockiert werden.

## Beschreibung

Die vorliegende Erfindung betrifft eine Einrichtung zur hydraulischen Dämpfung des Vorder- und/oder Hinterrads eines Zweiradfahrzeugs.

Es ist eine in Stufen verstellbare Einrichtung zur Radgabeldämpfung von Mountainbikes bekannt geworden, die aber den grossen Nachteil aufweist, dass zum Verstellen die Fahrt unterbrochen werden muss. Nachdem der Fahrer abgestiegen ist, kann er links und rechts des Vorderrads an jeder Radgabelhälfte die gewünschte Stufe einstellen und darauf die Fahrt wieder fortsetzen. Insbesondere für sportliche Zwecke ist eine solche Einrichtung nicht geeignet.

Die Erfindung stellt sich nun die Aufgabe, eine Einrichtung der im Oberbegriff des Anspruchs 1 genannten Art zu schaffen, bei der die erwähnten Nachteile vermieden werden und mit der die Dämpfung bequem eingestellt werden kann.

Die gestellte Aufgabe wird durch eine Einrichtung gelöst, welche die kennzeichnenden Merkmale des unabhängigen Patentanspruchs 1 aufweist.

Indem die Einrichtung zumindest ein fremdbetätigtes Steuerventil aufweist, mittels welchem die pro Zeiteinheit verdrängte und für die Dämpfung massgebende Ölmenge variierbar ist, wird die Voraussetzung geschaffen, damit die Dämpfung während der Fahrt verstellt werden kann.

Vorteilhafte Ausführungsformen der erfindungsgemässen Einrichtung sind in den abhängigen Patentansprüchen 2 bis 18 aufgeführt.

So kann zum Betätigen des Steuerventils beispielsweise ein zum Lenker führender Kabelzug vorgesehen werden. Dabei kann das Steuerventil bzw. die Betätigungsmittel sowohl für eine Verstellung in Stufen wie auch für eine stufenlose Verstellung ausgebildet sein.

Bei einer bevorzugten Ausführungsform ist vorgesehen, dass das Steuerventil hydraulisch mit beiden Gabelhälften einer Radgabel verbunden ist. Eine solche Gabel kann symmetrisch aufgebaut werden und bringt, im Gegensatz zu einer Gabel bei der nur die Dämpfung einer Gabelhälfte beeinflussbar ist, fahrdynamische Vorteile.

Da sich das Steuerventil insbesondere zum Verändern der Dämpfung beim Einfedern eignet, wird in einem weiteren, bevorzugten Ausführungsbeispiel vorgeschlagen, den Innenraum des Hubrohrs über eine Bohrung hydraulisch mit dem Zwischenraum zwischen Standrohr und Hubrohr zu verbinden und ein verstellbares Drosselglied zum Verändern des Durchflussquerschnitts der Bohrung vorzusehen. Da die Gabel so ausgelegt ist, dass beim Ausfedern zwangsweise Öl durch diese Bohrung strömen muss, kann die Dämpfung beim Ausfedern mittels dieses Drosselglieds verändert bzw. eingestellt werden.

Nachfolgend wird ein erfindungsgemässes Ausführungsbeispiel anhand von Zeichnungen näher erläutert, wobei in den Zeichnungen nur die für das Verständnis der Erfindung notwendigen Teile gezeigt sind. Es zeigen:
Fig. 1 die Vorderradgabel 1 eines Mountainbikes, wobei eine Radgabelhälfte geschnitten und die andere in einer Ansicht dargestellt ist;
Fig. 2 den oberen Teil der Vorderradgabel gemäss Fig. 1 in vergrösserter Darstellung;
Fig. 3 der mittlere Teil der Vorderradgabel in einer weiter vergrösserten Ansicht;
Fig. 4 das geschnittene Mittelrohr aus Fig. 1 in vergrösserter Darstellung, und
Fig. 5 das Steuerventil in vergrösserter Darstellung.

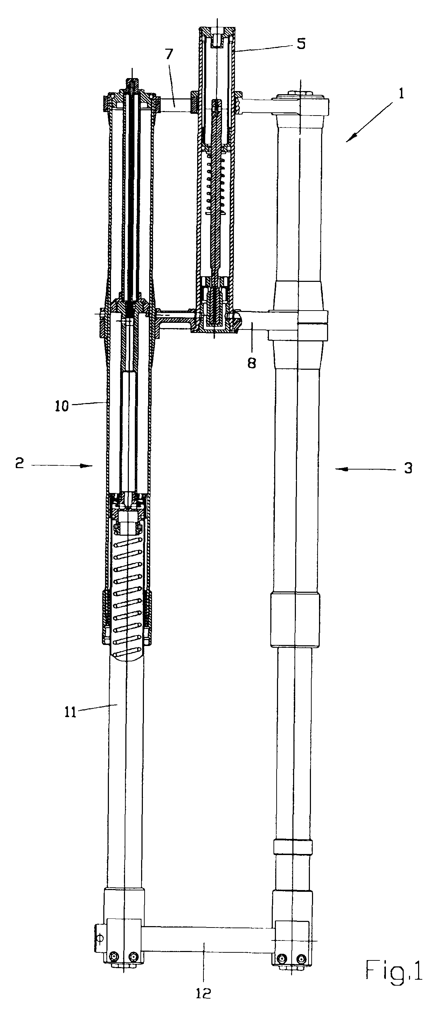

Anhand der Fig. 1, wird der grundsätzliche Aufbau einer Vorderradgabel 1 für ein Mountainbike näher erläutert. Da die prinzipielle Funktionsweise von hydraulisch gedämpften Vorderradgabeln bekannt ist, wird nachfolgend nur auf die im Zusammenhang mit der Erfindung wesentlichen Elemente eingegangen. Die im ausgefederten Zustand gezeigte Vorderradgabel 1 weist eine linke Gabelhälfte 2 und eine rechte Gabelhälfte 3 auf. Zwischen den Gabelhälften 2, 3 ist ein Mittelrohr 5 angeordnet, das über eine obere Gabelbrille 7 und eine untere Gabelbrille 8 mechanisch mit den beiden Gabelhälften 2, 3 verbunden ist. Am oberen Ende des Mittelrohrs 5 ist im Normalfall der Lenker (in Fig. 1 nicht dargestellt) befestigt.

Da beide Gabelhälften 2, 3 identisch aufgebaut sind, wird bei den nachfolgenden Erläuterungen der Vorderradgabel 1 jeweils nur auf die linke, im Schnitt dargestellte Gabelhälfte 2 Bezug genommen. Die Gabelhälfte 2 weist ein Standrohr 10 auf, welches in den beiden Gabelbrillen 7, 8 fixiert ist. Das Standrohr 10 umgreift ein Tauchrohr 11, an dessen unterem Ende ein Radnabenflansch 12 zur Befestigung des Vorderrades (nicht eingezeichnet) angeordnet ist.

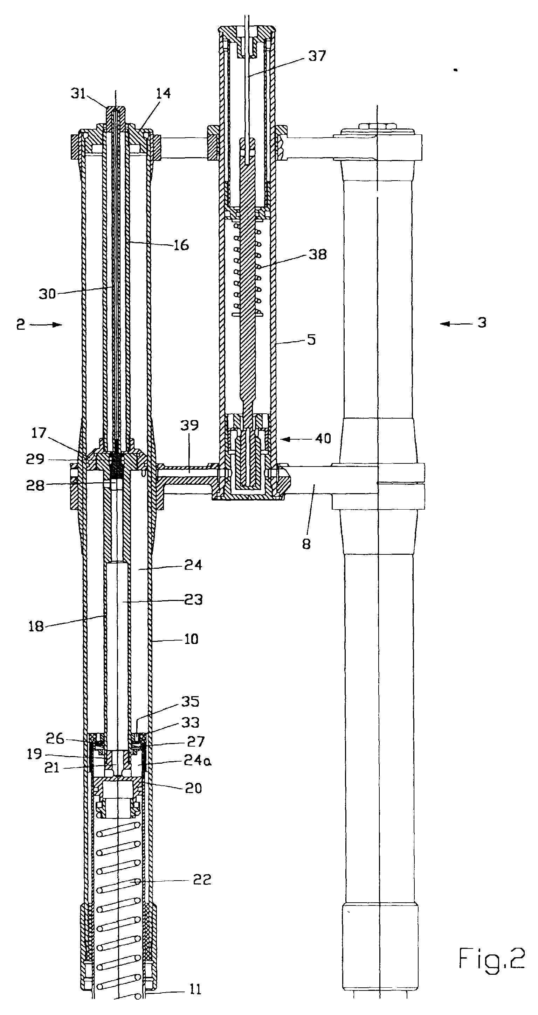

Fig. 2 zeigt den oberen Teil der Vorderradgabel 1 gemäss Fig. 1 in vergrösserter Darstellung, wobei die Vorderradgabel 1 in geringfügig eingefedertem Zustand dargestellt ist. Das Standrohr 10 ist am oberen Ende von einem Deckel 14 verschlossen. In diesem Deckel 14 ist ein Abstützrohr 16 fixiert, welches am unteren Ende in einer Aufnahme 17 abgestützt ist. In der Aufnahme 17 ist ausserdem ein Hubrohr 18 abgestützt. Am unteren Ende des Hubrohrs 18 ist ein Kolben 20 angeordnet, der einen mit einem Aussengewinde versehenen Fortsatz 19 aufweist. Dieser Fortsatz 19 ist in ein Innengewinde des Hubrohrs 18 eingeschraubt. Der Fortsatz 19 des Kolbens 20 weist eine T-förmig ausgestaltete Durchgangsbohrung 21 auf, über welche der Innenraum 23 des Hubrohrs 18 mit dem Raum 24a zwischen Hubrohr 18 und Standrohr 10 verbunden ist. Am Kolben 20 ist eine Druckfeder 22 abgestützt, welche den Ausfedervorgang unterstützt, indem sie das Tauchrohr 11 nach unten drückt. Das Tauchrohr 11 ist am oberen Ende mit einer Verschlusskappe 33 versehen, welche vier vertikale Durchflussöffnungen 35 aufweist, wobei aus dieser Darstellung nur deren zwei ersichtlich sind. Der Raum zwischen Hubrohr 18 und Standrohr 10 ist auf der Oberseite der Verschlusskappe 33 mit dem Bezugszeichen 24 und auf der Unterseite der Verschlusskappe 33 mit dem Bezugszeichen 24a versehen. Zum Verschliessen der Durchflussöffnungen 35 ist ein durch eine Ringscheibe 26 gebildetes und durch eine Feder 27 belastetes Rückschlagventil vorgesehen, welches beim Einfedern öffnet und beim Ausfedern schliesst. Das Hubrohr 18 ist im Bereich des oberen Endes mit einer radialen Bohrung 28 versehen, deren Durchflussquerschnitt mittels einer Stellschraube 29 veränderbar ist. Die Stellschraube 29 ist mit einem Stellrohr 30 verbunden, das durch den Deckel 14 hindurchgeführt und am Ende mit einem Betätigungsglied 31 versehen ist.

Im Mittelrohr 5 ist ein hydraulisches Steuerventil 40 aufgenommen, welches über einen in die untere Gabelbrille 8 eingelassenen Kanal 39 mit dem Raum 24 zwischen Hubrohr 18 und Standrohr 10 hydraulisch verbunden ist. Das Steuerventil 40 ist dabei ebenfalls mit der rechten Gabelhälfte 3 verbunden. Das Steuerventil 40 ist über einen zum Lenker (nicht sichtbar) führenden Kabelzug 37 betätigbar. Eine Druckfeder 48 sorgt für die Rückstellung des Kabelzugs 37.

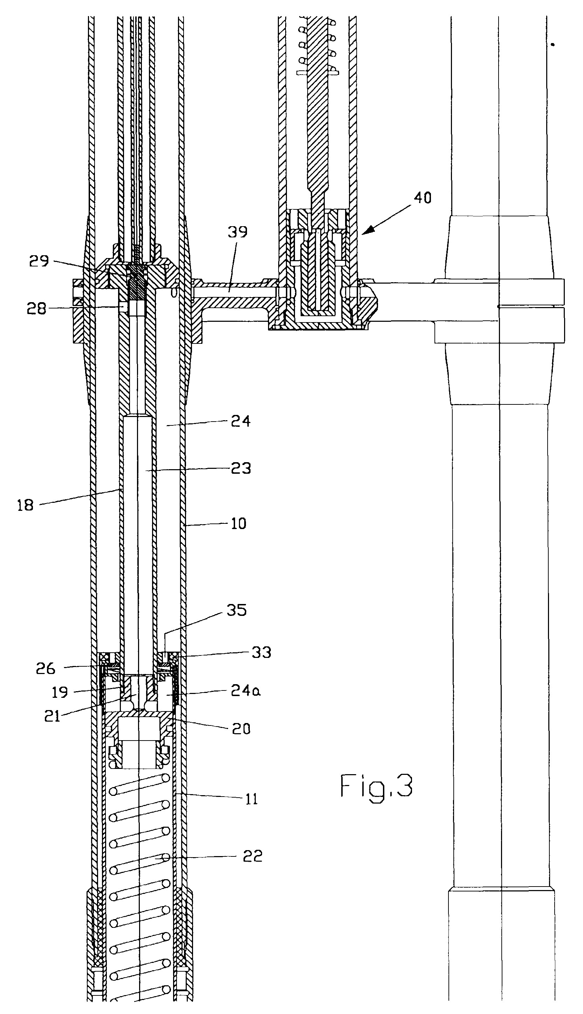

Aus der Fig. 3 ist in einer weiter vergrösserten Ansicht der mittlere Teil der Vorderradgabel 1 ersichtlich. Aus dieser Darstellung geht hervor, dass die in den Fortsatz 19 des Kolbens 20 eingelassene Durchgangsbohrung 21 in den Zwischenraum 24a mündet, und dass das Rückschlagventil 26 in den Durchflussöffnungen 35 der Verschlusskappe 33 angeordnet ist.

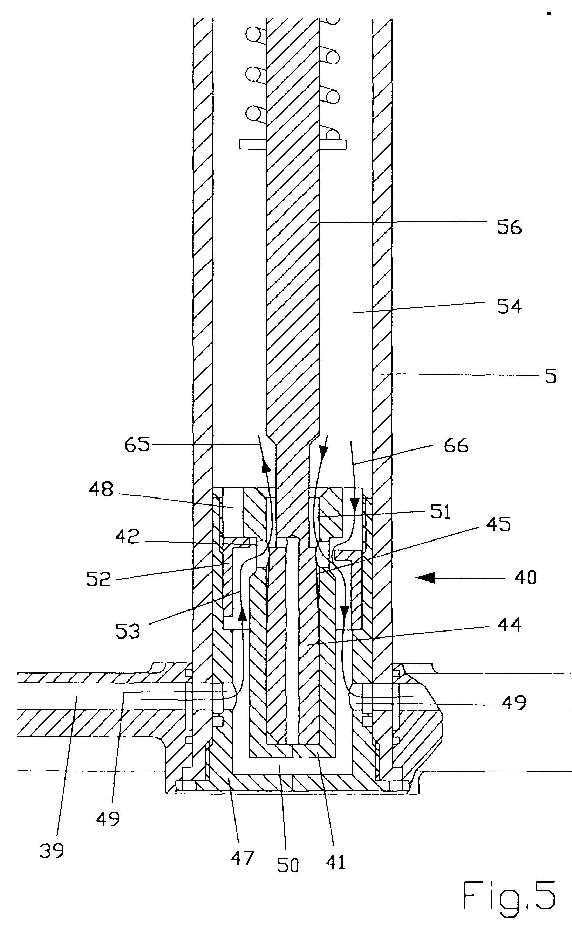

Beim Einfedern der Gabel, was beispielsweise durch das Überfahren einer Bodenunebenheit bewirkt wird, taucht das Tauchrohr 11 in das Standrohr 10 ein. Dabei entsteht ein Überdruck im Standrohr 10, durch welchen das Rückschlagventil 26 in der Verschlusskappe 33 öffnet und die Durchflussöffnungen 35 freigibt, so dass das Öl durch die Verschlusskappe 33 hindurch vom oberen Teil 24 des Zwischenraums in den unteren Teil 24a strömen kann. Beim Einfedern der Gabel wirkt die Verschlusskappe 33 als Drossel, welche die Dämpfung massgeblich mitbestimmt. Indem das Tauchrohr 11 in das Standrohr 10 eintaucht entsteht einerseits ein Überdruck im Zwischenraum 24. Ausserdem wird der Gesamtzwischenraum 24, 24a -in Abhängigkeit der Eintauchtiefe und der Wandstärke des Tauchrohrs 11- verkleinert. Dies bewirkt, dass das im Zwischenraum 24 aufgenommene Öl über die Bohrung 39 in das Mittelrohr 5 entweicht, wo es das Steuerventil 40 durchströmt, was anschliessend anhand der Figur 5 noch näher erläutert wird.

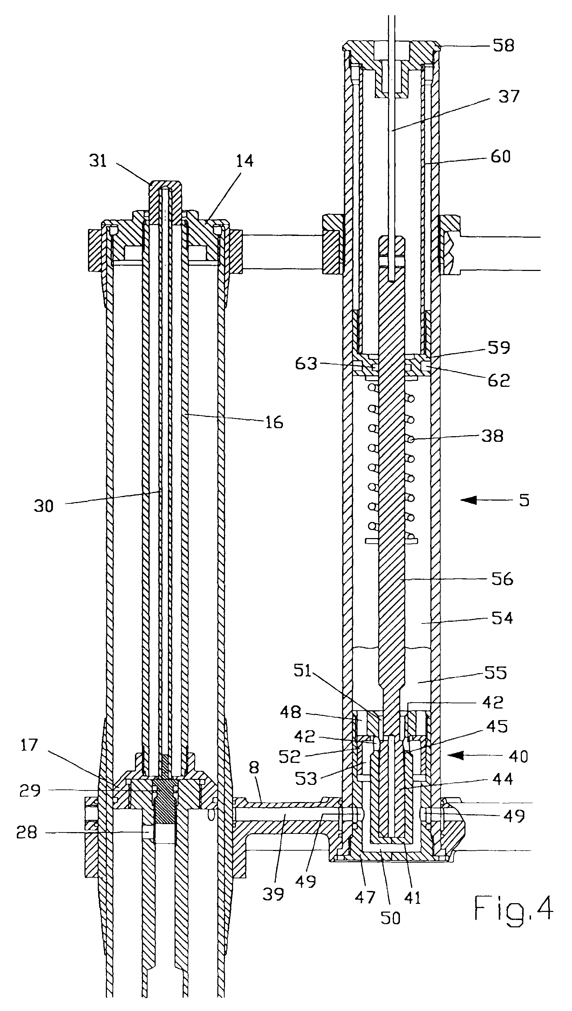

Fig. 4 zeigt das Mittelrohr 5 in einer gesamthaften Darstellung. Das im Mittelrohr 5 aufgenommene Steuerventil 40 umfasst eine hohlzylindrisch ausgebildete Hülse 41, in welche zwei radial verlaufende Durchflussöffnungen 42 eingelassen sind. In der T-förmig gestalteten Hülse 41 ist ein über den Kabelzug 37 betätigbarer Steuerschieber 44 beweglich aufgenommen. Dder Steuerschieber 44 weist eine bezüglich seiner Längsmittelachse konisch verlaufende Steuerfläche 45 auf, mittels welcher der Durchlassquerschnitt der Durchflussöffnungen 42 beim Verschieben des Steuerschiebers 44 sehr fein einstellbar ist. Das Mittelrohr 5 ist auf der Unterseite von einem Einsatz 47 verschlossen. Dieser Einsatz 47 weist zwei radiale Bohrungen 49 auf, welche den jeweiligen, in die untere Gabelbrille 8 eingelassenen Kanal 39 mit einem an der Aussenseite der Hülse 41 vorbeiführenden Ringraum 50 verbinden. Ausserdem weist die Hülse 41 vier axiale Bohrungen 48 auf, welche den Ringraum 50 mit einer Speicherkammer 54 verbinden. Von den vier axialen Bohrungen 48 sind aus dieser Darstellung nur deren zwei ersichtlich. Zum Verschliessen der axialen Bohrungen 48 beim Einfedern der Gabel ist ein im Querschnitt L-förmiges Rückschlagventil 52 vorgesehen, das von einer Druckfeder belastet ist. Die Druckfeder ist zugunsten einer übersichtlichen Darstellung nicht eingezeichnet. Schliesslich ist die Hülse 41 mit einer zentralen Bohrung 51 versehen, welche die Durchflussöffnungen 42 mit der Speicherkammer 54 verbinden.

Das Mittelrohr 5 ist auf der Oberseite von einem Deckel 58 verschlossen, durch den der Kabelzug 37 geführt ist. Zwischen dem Deckel 58 und einem Druckspeicherkolben 59 ist ein Druckspeicherkolbenrohr 60 montiert, wobei der Druckspeicherkolben 60 zwei Ringkanäle 62 und 63 zur Aufnahme von 0-Ringdichtungen aufweist, welche letztere zugunsten einer übersichtlichen Darstellung jedoch nicht eingezeichnet wurden. Nach dem Einfüllen von Öl ins Mittelrohr 5 wird der Druckspeicherkolben 59 mit dem Druckspeicherkolbenrohr 60 ins Mittelrohr 5 geschoben und mit dem Deckel 58 verschlossen. Durch das Einschieben wird die Luft über dem Ölstand 55 komprimiert, so dass sich in der Speicherkammer 54 ein Druckspeicher bildet, der im Ruhezustand, je nach der Länge des Druckspeicherkolbenrohrs 60 und der Höhe des Ölstandes 55, ca. 1 bis 2 Bar Überdruck aufweist.

Anhand der Figur 5, welche das Steuerventil 40 in einer vergrösserten Darstellung zeigt, soll dessen Wirkungsweise näher erläutert werden. Die linke Hälfte des Steuerventils 40 zeigt dessen Stellung beim Einfedern währenddem die rechte Hälfte des Steuerventils 40 die Stellung beim Ausfedern zeigt. Wie bereits erwähnt strömt durch das Einfedern der Gabel Öl über die Bohrung 39 in das Mittelrohr 5. Die Strömungsrichtung des Öls ist durch einen Pfeil 65 angedeutet. Dieses Öl gelangt über die radiale Bohrung 49 in den Ringraum 50. Von diesem Ringraum 50 strömt das Öl über die Durchflussöffnung 42 und die zentrale Bohrung 51 in der Hülse 41 in die Speicherkammer 54. Da das Rückschlagventil 52 beim Einfedern der Gabel geschlossen ist, wirkt das Steuerventil 40 als Drossel. Die Drosselwirkung kann durch ein Verschieben des Steuerschiebers 44 variiert werden. Ein Verschieben des Steuerschiebers 44 bewirkt eine Veränderung des Durchlassquerschnitts der Durchflussöffnungen 42 und damit auch der pro Zeiteinheit verdrängbaren und für die Dämpfung massgebenden Ölmenge. Durch die konisch verlaufende Steuerfläche 45 kann der Durchlassquerschnitt der Durchflussöffnungen 42 sehr fein dosiert werden. Durch ein Verschliessen der Durchflussöffnungen 42 kann die Gabel auch blockiert werden.

Beim Ausfedern der Gabel, was insbesondere durch die Druckfeder 22 (Fig. 2) bewirkt wird, wird das Volumen des Zwischenraums 24 wiederum vergrössert. Das Öl kann nun von der Speicherkammer 54, über das geöffnete Rückschlagventil 52 am Steuerventil 40 vorbei und danach über den in die Gabelbrille eingelassenen Kanal in die jeweilige Gabelhälfte (Zwischenraum 24 in Fig. 4) zurückströmen, was durch Pfeile 66 angedeutet ist. Das Zurückströmen des Öls wird nebst der entstehenden Sogwirkung insbesondere auch durch den in der Speicherkammer 54 vorherrschenden Überdruck begünstigt.

Beim der nach unten gerichteten Ausfederbewegung des Tauchrohrs 11 schliesst jedoch das Rückschlagventil 26 in der Verschlusskappe 33 (Fig. 3). Das sich auf der Unterseite der Verschlusskappe 33 im Zwischenraum 24a befindliche Öl muss daher durch die Bohrung 21 im Fortsatz 19 des Kolbens 20 und den Innenraum 23 des Hubrohrs 18 hindurch in den oberen Teil des Zwischenraums 24 zurückströmen. Am oberen Ende des Hubrohrs 18 tritt das Öl aus der Bohrung 28 aus. Der Durchlassquerschnitt dieser Bohrung 28 kann mittels der Stellschraube 29 verändert werden (Fig.4). Ein Verstellen der Stellschraube 29 bewirkt daher ein Verändern der Dämpfung beim Ausfedern der Gabel.

Die Vorteile der erläuterten Einrichtung können wie folgt zusammengefasst werden:
- Die Dämpfung beim Einfedern der Gabel kann während der Fahrt verstellt werden, wobei die Verstellung stufenlos oder in Stufen erfolgen kann;
- Das Einstellen der Dämpfung beim Einfedern der Gabel erfolgt für beide Gabelhälften gleichzeitig;
- Die Gabel kann blockiert werden (Schliessen des Steuerventils);
- Die Dämpfung beim Ausfedern der Gabel kann separat und auf einfache Art verstellt werden;
- Die Einrichtung ist kompakt, einfach und zuverlässig aufgebaut;
- Die Gabel besitzt eine lineare Kraftzunahme, wodurch ein sehr ausgewogenes Ansprechverhalten erreicht wird;
- Es besteht auch im Dauerbetrieb keine Überhitzungsgefahr;
- Die Einrichtung entlüftet sich selbst;
- Beim Einfedern der Gabel wird ein Überdruck in der das Öl enthaltenden Speicherkammer aufgebaut. Dieser Überdruck begünstigt das Zurückfliessen des Öls beim Ausfedern;
- Die Speicherkammer wirkt gleichzeitig als Öl-Vorratsbehälter.

Die beschriebene Einrichtung kann auch für die Verstellung der Dämpfung bei einem hydraulisch gefederten Hinterrad eingesetzt werden. Diesbezüglich ist es unerheblich, ob das Hinterrad über einen gelenkig am Fahrzeugrahmen befestigten Hebelmechanismus abgestützt und mit einem zentral angeordneten, hydraulischen Federbein versehen ist, oder ob das Hinterrad analog zum beschriebenen Vorderrad an zwei Radgabelhälften abgestützt ist.

Dabei ist es sowohl möglich, ein gemeinsames Steuerventil für das Vorder- und Hinterrad einzusetzen, wie auch getrennte Steuerventile vorzusehen. Ein gemeinsames Steuerventil hat den Vorteil einer einfachen Bedienung, indem, beispielsweise über einen am Lenker angeordneten Hebel, gleichzeitig die Vorder- und Hinterradämpfung verändert werden kann. Bei getrennten Steuerventilen für das Vorder- und Hinterrad kann deren Dämpfung separat eingestellt werden.

Es versteht sich, dass das Prinzip der erfindungsgemässen Einrichtung anstelle der in Fig. 1 gezeigten Vorderradgabel auch bei einer konventionellen Vorderradgabel verwendet werden kann, bei der das Tauchrohr an den beiden Gabelbrillen abgestützt und dafür das Standrohr 4 mit einem Radnabenflansch zur Befestigung des Rades versehen ist (kinematische Umkehr).

Um Gewicht zu sparen oder um das Einfederverhalten zu Verändern, könnte anstelle oder zusätzlich zu der Druckfeder 22 ein Überdruck im Tauchrohr erzeugt werden. Um das Einfederverhalten zu Verändern, könnte beispielsweise auch die Verschlusskappe 33 des Tauchrohrs 11 ausgetauscht werden. Beispielsweise könnte eine Verschlusskappe 33 mit grösseren oder kleineren Durchflussöffnungen 35 verwendet werden. Ebenso könnte ein anderes Hubrohr 18 mit einer grösseren oder kleineren oder an einem anderen Ort angeordneten radialen Bohrung 28 eingesetzt werden. Durch den Austausch des Hubrohrs 18 kann zudem der Federweg verändert werden.

Eine weitere Variante besteht darin, dass anstelle eines mechanisch betätigten Steuerschiebers beispielsweise ein elektromechanisch betätigter Steuerschieber oder eine auslenkbare Membran zum Einsatz kommen.

Ebenso könnte das Steuerventil 40 anstelle im Mittelrohr 5 im Oberteil der einen Radgabelhälfte angeordnet werden.

Obwohl die erfindungsgemässe Radgabeldämpfung an einem Mountainbike beschrieben wurde, kann sie für jedes Zweiradfahrzeug -oder ggf. auch für Dreiradfahrzeug- verwendet werden, bei dem ein Einzelrad in einer Radgabel geführt ist. Ausserdem sind im Rahmen des in den Patentansprüchen definierten Schutzumfangs durchaus von vorgängigem Beispiel abweichende Ausführungsformen der Einrichtung denkbar.

## Patentansprüche

1. Einrichtung zur hydraulischen Dämpfung des Vorder- und/oder Hinterrads eines Zweiradfahrzeugs, **dadurch gekennzeichnet,** dass die Einrichtung Mittel zum Verstellen der Dämpfung während der Fahrt aufweist, indem zumindest ein fremdbetätigtes Steuerventil (40) vorgesehen ist, mittels welchem die pro Zeiteinheit verdrängbare und für die Dämpfung massgebende Ölmenge variierbar ist.

2. Einrichtung nach Anspruch 1, dadurch gekennzeichnet, dass das Steuerventil (40) zumindest eine Durchflussöffnung (42) für das Dämpfungsöl aufweist, deren Durchflussquerschnitt durch einen Steuerschieber (44) stufenlos oder in Stufen verstellbar ist.

3. Einrichtung nach Anspruch 2, dadurch gekennzeichnet, dass das zu dämpfende Rad mittels einer Radgabel (1) am Fahrzeugrahmen abgestützt ist, wobei beide Radgabelhälften (2, 3) jeweils ein Standrohr (5) und ein Hubrohr (18) aufweisen, in deren Zwischenraum (24) ein relativ verschiebbares Tauchrohr (11) eintauchbar ist, und wobei das Steuerventil (40) hydraulisch mit zumindest einer Radgabelhälfte verbunden ist, so dass durch eine Relativbewegung des Tauchrohrs (11) Dämpfungsöl durch das Steuerventil (40) gepresst wird.

4. Einrichtung nach Anspruch 2 zur Dämpfung des Hinterrads, welches über einen gelenkig am Fahrzeugrahmen befestigten Hebelmechanismus abgestützt und mit einem zentral angeordneten, hydraulischen Federbein versehen ist, dadurch gekennzeichnet, dass das Federbein hydraulisch mit dem Steuerventil (40) verbunden ist.

5. Einrichtung nach einem der Ansprüche 2 bis 4, dadurch gekennzeichnet, dass das Steuerventil (40) eine hohlzylindrisch ausgebildete Hülse (41) umfasst, in welche zumindest eine radial verlaufende Durchflussöffnung (49) eingelassen ist, wobei der Steuerschieber (44) beweglich in der Hülse (41) aufgenommen ist und eine bezüglich seiner Längsmittelachse konisch verlaufende Steuerfläche (45) aufweist, mittels welcher der Durchlassquerschnitt der Durchflussöffnung (49) variierbar ist.

6. Einrichtung nach Anspruch 2, 3 oder 5, dadurch gekennzeichnet, dass das Steuerventil (40) hydraulisch mit beiden Gabelhälften (2, 3) einer Radgabel (1) verbunden ist.

7. Einrichtung nach einem der Ansprüche 2 bis 6, dadurch gekennzeichnet, dass das Steuerventil ein von einer Druckfeder (33) beaufschlagtes Rückschlagventil (31) aufweist, über welches das Öl beim Ausfedern der Radgabel (1) am Steuerschieber (27) vorbei zurückfliessen kann.

8. Einrichtung nach einem der Ansprüche 2 bis 7, dadurch gekennzeichnet, dass der Steuerschieber (27) mittels einer Feder (38) belastet und mechanisch über einen Kabelzug (37) betätigbar ist.

9. Einrichtung nach einem der Ansprüche 2 bis 7, dadurch gekennzeichnet, dass der Steuerschieber (27) elektromechanisch betätigbar ist.

10. Einrichtung nach einem der vorhergehenden Ansprüche, dadurch gekennzeichnet, dass das Steuerventil (40) in einer Kammer (54) aufgenommen ist, welche im Oberteil der einen Radgabelhälfte oder in einem Mittelrohr (5) angeordnet ist.

11. Einrichtung nach einem der Ansprüche 3 oder 5 bis 10, dadurch gekennzeichnet, dass der Innenraum des Hubrohrs (18) über eine Bohrung (28) hydraulisch mit dem Zwischenraum (24) zwischen Standrohr (5) und Hubrohr (20) verbunden ist, und dass ein verstellbares Drosselglied (29) zum Verändern des Durchflussquerschnitts der Bohrung (28) vorgesehen ist.

12. Einrichtung nach einem der Ansprüche 3 oder 5 bis 11, dadurch gekennzeichnet, dass das Hubrohr (18) endseitig von einem zumindest eine Durchgangsbohrung (21) aufweisenden Kolben (20) verschlossen ist, über welche Durchgangsbohrung (21) der Innenraum (23) des Hubrohrs (18) mit dem Zwischenraum (24a) zwischen Standrohr (5) und Hubrohr (20) verbunden ist.

13. Einrichtung nach einem der Ansprüche 3 oder 5 bis 12, dadurch gekennzeichnet, dass das Hubrohr (18) auf der der Bohrung (28) gegenüberliegenden Seite von einer Verschlusskappe (33) verschlossen ist, welche zumindest eine axiale Durchflussöffnung (35) aufweist, über die das Öl vom einen Teil des Zwischenraums (24) in den anderen Teil des Zwischenraums (24a) strömen kann.

14. Einrichtung nach einem der Ansprüche 3 oder 5 bis 13, dadurch gekennzeichnet, dass die Verschlusskappe (33) mit einem Rückschlagventil (26) versehen ist, welches die Durchflussöffnung(en) (35) beim Einfedern öffnet und beim Ausfedern schliesst.

15. Einrichtung nach einem der Ansprüche 3 oder 5 bis 14, dadurch gekennzeichnet, dass die beiden Radgabelhälften (2, 3) mechanisch über eine Gabelbrille (8) miteinander verbunden sind, und dass das Steuerventil (40) über einen Kanal (39) in der Gabelbrille (8) mit dem Zwischenraum (24) zwischen Hubrohr (18) und Tauchrohr (11) verbunden ist.

16. Einrichtung nach den Ansprüchen 11 und 15, dadurch gekennzeichnet, dass die Bohrung (28) auf der dem Kanal (39) abgewandten Seite in das Hubrohr (18) eingelassen ist.

17. Einrichtung nach Anspruch 10, dadurch gekennzeichnet, dass die Kammer (54) teilweise mit Öl gefüllt ist, und dass die Kammer auf der Oberseite von einem eine Druckkammer begrenzenden Druckspeicherkolben (59) und einem Druckspeicherkolbenrohr (60) abgeschlossen ist.

18. Einrichtung nach einem der Ansprüche 3 oder 5 bis 17, dadurch gekennzeichnet, dass zum Rückstellen der eingefederten Radgabel eine Druckfeder (18) und/oder ein Luftdruckspeicher vorgesehen ist/sind.
